# EUROPEAN PATENT APPLICATION

(11) **EP 1 701 400 A1**
(43) Date of publication of application: **13.09.2006**
(21) Application number: 06004845.1
(22) Date of filing: 09.03.2006
(51) Int. Cl.: H01M 8/02

(54) **Conductive epoxy resin composition and separator for fuel cell**

(30) Priority: 11.03.2005 JP 2005069900
(71) Applicant: NICHIAS CORPORATION, Tokyo 105-8555 (JP)
(72) Inventor: Murakami, Atsushi c/o Nichias Corporation, Hamamatsu-shi Shizuoka 431-2103 (JP); Shimizu, Takayoshi c/o Nichias Corporation, Hamamatsu-shi Shizuoka 431-2103 (JP)
(74) Representative: Grünecker, Kinkeldey, Stockmair & Schwanhäusser Anwaltssozietät

(57) **Abstract**

The present invention provides a conductive epoxy resin composition which comprises an epoxy resin, a hardener, a hardening accelerator and a carbon material comprising expanded graphite, wherein the hardening accelerator comprises at least one member selected from the group consisting of phosphine hardening accelerators, phosphonium hardening accelerators, amine hardening accelerators and imidazole hardening accelerators, and is contained in an amount of 0.01 to 10 parts by weight per 100 parts by weight of the hardener. Also disclosed are a process for producing the epoxy resin composition, and a separator for fuel cells and a process for producing the same using the epoxy resin composition.

## Description

### FIELD OF THE INVENTION

The present invention relates to an epoxy resin composition having electrical conductivity. The invention further relates to a fuel-cell separator obtained by molding the conductive epoxy resin composition and a process for producing the separator.

### BACKGROUND OF THE INVENTION

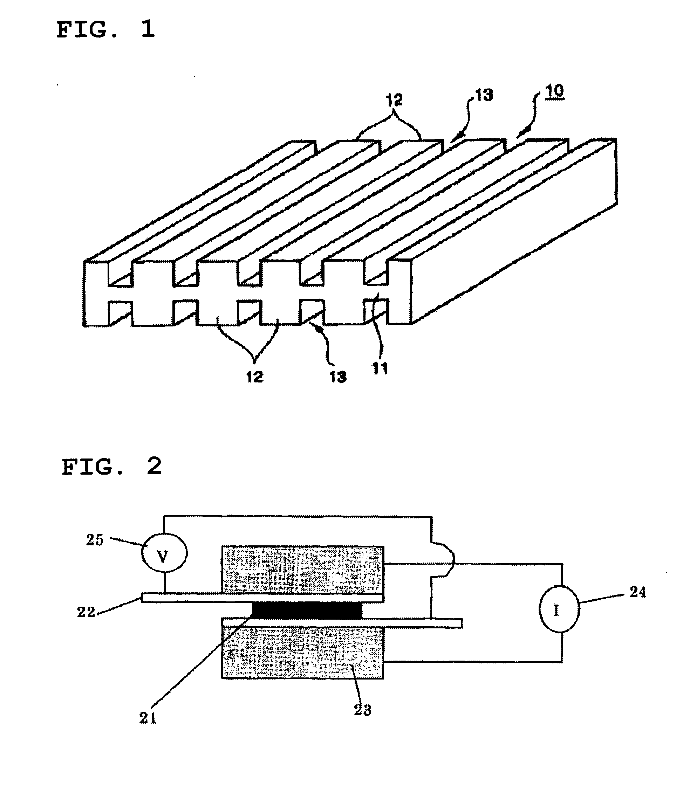

As illustrated by the diagrammatic slant view given in Fig. 1, a separator 10 for fuel cells is constituted, for example, of a flat plate part 11 and partition walls 12 protruding from each side thereof at a given interval. In fabricating a fuel cell, many such fuel-cell separators 10 are stacked in the direction of projection of the partition walls 12 (top-bottom direction in the figure). As a result of this stacking, channels 13 are formed each by a pair of adjacent partition walls 12. Reactant gases (hydrogen and oxygen) are passed through these channels 13. Separators for fuel cells are produced by molding a resin composition comprising a resin material and a conductive material, e.g., a graphite, into a shape such as that described above.

Separators for fuel cells are molded generally by thermo-compression molding, in which a mixture comprising a thermosetting resin such as an epoxy resin or phenolic resin, a hardener, a hardening accelerator, a carbon material, etc. is charged into a mold and hot-pressed. However, this thermo-compression molding has low productivity and, hence, it has been attempted to produce a separator for fuel cells by injection molding (see, for example, patent documents 1 to 3).

In injection molding, a compound which is a resin composition comprising those ingredients is passed through the cylinder and injected into a mold. In this operation, the compound is transferred to the mold cavity through a narrow passage called a runner. In addition, since the mold in this stage is in a closed state, the compound should have high flowability so as to fill all parts of the mold cavity. However, in the case where an artificial graphite or natural graphite is employed as a carbon material, it is necessary to add this material in a large amount for securing the electrical conductivity required of separators for fuel cells. As a result, the resin amount becomes relatively small and the resin composition hence has an increased viscosity and reduced flowability.

Expanded graphite, which has excellent conductivity, may be used as a carbon material in a smaller amount to thereby obtain a resin composition having enhanced flowability. However, since expanded graphite is in the form of thin flakes, use of it has a problem that the flakes are apt to break during mixing with a resin material. The reason for this is as follows. Although a resin composition is usually obtained by melt-kneading a resin material, hardener, hardening accelerator, carbon material, etc., hardening by the hardener proceeds during the melt kneading. As a result, the viscosity of the composition increases during the melt kneading and a high shear force acts on the expanded graphite to break it. On the other hand, a technique has been proposed in which a resin composition is prepared through dry mixing in place of melt kneading (see, for example, patent document 4). However, the composition thus prepared is so high in viscosity that it hardly flows. This composition is substantially incapable of injection molding.
Patent Document 1: JP-A-2003-338294
Patent Document 2: JP-A-2003-297386
Patent Document 3: JP-A-2003-242994
Patent Document 4: JP-A-2003-257447

### SUMMARY OF THE INVENTION

The invention has been made in view of the circumstances described above.

An object of the invention is to provide a conductive epoxy resin composition which has high electrical conductivity and is easily applicable to injection molding and transfer molding, which have excellent productivity.

Another object of the invention is to provide a separator for fuel cells which is a high-strength, highly conductive separator obtained by molding the conductive epoxy resin composition.

Other objects and effects of the invention will become apparent from the following description.

In order to accomplish those objects, the invention provides the following.
(1) A conductive epoxy resin composition which comprises an epoxy resin, a hardener, a hardening accelerator and a carbon material comprising expanded graphite,
   wherein the hardening accelerator comprises at least one member selected from the group consisting of phosphine hardening accelerators, phosphonium hardening accelerators, amine hardening accelerators and imidazole hardening accelerators, and is contained in an amount of 0.01 to 10 parts by weight per 100 parts by weight of the hardener.
(2) The conductive epoxy resin composition as described in item (1) above wherein the hardening accelerator is triphenylphosphine or 2-methylimidazole.
(3) The conductive epoxy resin composition as described in item (1) or (2) above wherein the hardener has two or more phenolic hydroxyl groups in its molecule.
(4) The conductive epoxy resin composition as described in any one of items (1) to (3) above wherein the epoxy resin is a polyfunctional epoxy resin.
(5) The conductive epoxy resin composition as described in any one of items (1) to (4) above wherein the expanded graphite accounts for 5 to 100% by weight of the carbon material, and the remainder of the carbon material is at least one member selected from the group consisting of artificial graphites, natural flaky graphite, earthy graphite, carbon blacks and carbon fibers.
(6) The conductive epoxy resin composition as described in any one of items (1) to (5) above wherein the carbon material accounts for 35 to 85% by weight of the whole amount of the composition.
(7) A process for producing a conductive epoxy resin composition which comprises:
   adding given amounts of an epoxy resin, a hardener, and a carbon material comprising expanded graphite to 0.01 to 10 parts by weight, per 100 parts by weight of the hardener, of at least one member selected from the group consisting of phosphine hardening accelerators, phosphonium hardening accelerators, amine hardening accelerators and imidazole hardening accelerators; and then
   melt-mixing the ingredients at a temperature not lower than the softening temperature of the epoxy resin or the hardener.
(8) A separator for fuel cells, which is formed from the conductive epoxy resin composition as described in any one of items (1) to (6) above.
(9) A process for producing a separator for fuel cells, comprising injection-molding the conductive epoxy resin composition as described in any one of items (1) to (6) above.

The conductive epoxy resin composition of the invention can have sufficient conductivity even when the amount of the expanded graphite contained therein is small. The relative resin amount can hence be increased and the composition has excellent flowability. Furthermore, due to the specific hardening accelerator, the expanded graphite is inhibited from breaking during production and the excellent conductivity brought about by the expanded graphite can be maintained.

Because of these, the conductive epoxy resin composition of the invention can be molded by injection molding or transfer molding, which has high productivity. Consequently, a molded object and a fuel-cell separator each having high strength and excellent conductivity can be efficiently obtained.

### BRIEF DESCRIPTION OF THE INVENTION

Fig. 1 is a diagrammatic slant view illustrating an example of the separator for fuel cells.
Fig. 2 is a diagrammatic view showing the method of measuring a passing-through direction resistance used in the Examples.

The reference numerals used in the drawings denote the followings, respectively.
10: Separator for fuel cell
11: Flat plate part
12: Partition wall
13: Channel

### DETAILED DESCRIPTION OF THE INVENTION

The invention will be explained below in detail.

The conductive epoxy resin composition of the invention comprises an epoxy resin, a hardener, a carbon material comprising expanded graphite, and a specific hardening accelerator, as essential ingredients.

The epoxy resin is a compound having two or more epoxy groups, and any of known epoxy resins can be used. Examples thereof include bisphenol epoxy resins such as bisphenol A epoxy resins, bisphenol F epoxy resins, bisphenol AF epoxy resins, bisphenol S epoxy resins, hydrogenated bisphenol A epoxy resins, and halogenated bisphenol A epoxy resins; polyfunctional epoxy resins such as phenol-novolak epoxy resins, cresol-novolak epoxy resins, bisphenol A-novolak epoxy resins, trishydroxyphenylmethane epoxy resins, phenol-dicyclopentadiene epoxy resins, halogenated phenol-novolak epoxy resins, naphthol-novolak epoxy resins, resorcinol epoxides, and tetraphenylolethane epoxy resins; alicyclic epoxy resins; biphenyl epoxy resins; naphthalene epoxy resins; glycidyl ester epoxy resins; and glycidylamine epoxy resins. However, the epoxy resin to be used in the composition should not be construed as being limited to these examples. Polyfunctional epoxy resins are preferred of those examples in the invention because they give molded objects having high heat resistance and high strength. Those epoxy resins have an epoxy equivalent of preferably 50 to 500, more preferably 100 to 300. Epoxy resins having too low an epoxy equivalent give brittle moldings. On the other hand, epoxy resins having too high an epoxy equivalent only give moldings having low heat resistance and low strength.

The epoxy resin reacts with the hardener to thereby yield a cured epoxy resin. As this hardener also, various known compounds can be used. Examples of the hardener include aliphatic, alicyclic, and aromatic polyamines such as diethylenetriamine, triethylenetetramine, tetraethylenepentamine, menthenediamine, isophoronediamine, N-aminoethylpiperazine, m-xylenediamine, and diaminodiphenylmethane and carbonates of these polyamines; acid anhydrides such as phthalic anhydride, methyltetrahydrophthalic anhydride, methylhexahydrophthalic anhydride, methylnadic anhydride, dodecylsuccinic anhydride, pyromellitic anhydride, benzophenonetetracarboxylic anhydride, trimellitic anhydride, and poly(azelaic anhydride); polyphenols such as phenolic novolaks and cresol novolaks; and polymercaptans. However, the hardener should not be construed as being limited to these examples. Two or more such hardeners may be used in combination.

Of the hardeners shown above, the polyamines and carbonates thereof, acid anhydrides, polyphenols, and polymercaptans themselves undergo a polyaddition reaction with an epoxy compound to constitute a cured epoxy resin. These hardeners are hence called polyaddition type hardeners. A deficiency in the amount of a polyaddition type hardener leads to residual unreacted functional groups. There is hence a proper range of the amount of the hardener to be added. In general, it is preferred to use a polyaddition type hardener in an amount of 0.7 to 1.2 equivalents, especially 0.8 to 1.1 equivalent, to the epoxy groups of the epoxy resin. By selecting any of various kinds and amounts of those hardeners and any of various kinds and amounts of epoxy resins, the rate of hardening of the epoxy resin can be varied at will. It may be easy for one skilled in the art to determine the kinds and amounts of an epoxy resin and a hardener according to desired hardening conditions.

It is preferred in the invention to use a compound having two or more phenolic hydroxyl groups as the hardener. Examples of such compound include polyphenols such as phenolic novolaks, cresol novolaks, bisphenol A novolaks, aralkyl phenolic novolaks, triphenylmethane phenolic resins, terpene phenol resins, naphthol novolaks, and phenol-dicyclopentadiene resins and bisphenol A. With such hardeners having two or more phenolic hydroxyl groups, a molded object having high heat resistance can be obtained.

In the invention, at least one hardening accelerator selected from phosphine hardening accelerators, phosphonium hardening accelerators, amine hardening accelerators and imidazole hardening accelerators is used. Preferred examples thereof include phosphorus compounds such as triphenylphosphine, tri-n-tolylphosphine, tri-p-tolylphosphine, tri-m-tolylphosphine, tribenzylphosphine, tris(p-methoxyphenyl)phosphine, tris(p-tert-butoxyphenyl)phosphine, tri-2,4-xylylphosphine, tri-2,5-xylylphosphine, tri-3,5-xylylphosphine, tri-n-octylphosphine, tetrabutylphosphonium bromide, tetraphenylphosphonium bromide, methyl(triphenyl)phosphonium bromide, methyl(triphenyl)phosphonium chloride, ethyl(triphenyl)phosphonium bromide, n-propyltriphenylphosphonium bromide, n-butyltriphenylphosphonium bromide, methoxymethyltriphenylphosphonium chloride, benzyltriphenylphosphonium chloride, 2-carboxytriphenylphosphonium bromide, benzyltriphenylphosphonium hexafluoroantimonate, tetraphenylphosphonium tetraphenylborate, tetraphenylphosphonium tetra-p-tolylborate, benzylphenylphosphonium tetraphenylborate, tetraphenylphosphonium tetrafluoroborate, and p-tolyltriphenylphosphonium tetra-p-tolylborate; amine compounds such as tris(dimethylaminomethyl)phenol, N,N-dimethylcyclohexylamine, and tetramethylethylenediamine; imidazole compounds such as 2-methylimidazole, 2-undecylimidazole, 2-heptadecylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2,4-diamino-6-[2'-methylimidazolyl-(1')]-ethyl-s-triazine isocyanuric acid adducts, 2-phenylimidazole isocyanuric acid adducts, 2-methylimidazole isocyanuric acid adducts, 2-phenyl-4,5-dihydroxymethylimidazole, 2-phenyl-4-methyl-5-hydroxymethylimidazole, and 2,3-dihydro-1H-pyrrolo[1,2-a]benzimidazole; diazabicyclo compounds such as 1,8-diazabicyclo[5.4.0]undecane-7 (abbreviated as DBU), 1,5-diazabicyclo[4.3.0]nonene-5 (abbreviated as DBN), and 6-dibutylamino-1,8-diazabicyclo[5.4.0]undecene-7; and salts of these compounds with organic acids. However, the hardening accelerator to be used in the invention should not be construed as being limited to these examples. Of these, 2-methylimidazole and triphenylphosphine are preferred hardening accelerators for use in the invention because their function of hardening acceleration is moderate and they are easily available at low cost.

The invention has a feature that the specific hardening accelerator described above is used in a minimal amount. Although too large hardening accelerator amounts are preferred from the standpoint that hardening can be completed in a short time period to attain a reduction in the time required for each molding cycle, they result in impaired conductivity for the reasons which will be described later. It is, however, noted that too small hardening accelerator amounts pose a problem that the molding cycle time is prolonged although conductivity is improved. Consequently, the amount of the hardening accelerator to be used invention is 0.01 to 10 parts by weight, preferably 0.1 to 7 parts by weight, more preferably 0.5 to 5 parts by weight, still further preferably 1 to 3 parts by weight, per 100 parts by weight of the hardener. By using the hardening accelerator in an amount within that range, a conductive epoxy resin composition is obtained which has an excellent balance between conductivity and molding cycle.

The carbon material comprises expanded graphite as an essential ingredient. Ordinary flaky graphite is composed of flaks each made up of thin platy crystals stacked. In contrast, expanded graphite is a graphite obtained by treating flaky graphite with concentrated sulfuric acid, nitric acid, hydrogen peroxide, or the like to intercalate the liquid chemical into the spaces between the thin platy crystals and then heating the graphite to vaporize the intercalated liquid chemical and thereby widen the spaces between the thin platy crystals. Compared to flaky graphite and spherical graphite, expanded graphite has a lower bulk density and a larger surface area and is composed of particles of a thinner platy shape. Because of this, expanded graphite readily forms conduction paths upon mixing with a resin to thereby impart greatly improved conductivity to the resultant molding. The amount of the graphite to be used can hence be reduced and the relative amount of the resin can be increased. Consequently, the resin composition can have enhanced flowability. Furthermore, since expanded graphite is composed of thin flakes, it is more flexible than artificial graphites and natural graphites and the molded object obtained with the graphite is flexible.

The carbon material may consist of expanded graphite only, or may comprise expanded graphite as part thereof and one or more other carbon materials as the remainder. Examples of the carbon materials other than expanded graphite include flaky artificial graphite, spherical artificial graphite, natural flaky graphite, carbon blacks, carbon fibers, carbon nanofibers, carbon nanotubes, diamond-like carbon, fullerenes, and carbon nanohorns. However, the carbon material should not be construed as being limited to these examples. The proportion of expanded graphite in the carbon material is preferably 5 to 100% by weight, more preferably 20 to 80% by weight, still further preferably 30 to 70% by weight, especially preferably 40 to 60% by weight. In case where the proportion of expanded graphite is low, increased contact resistance results. In case where the proportion of expanded graphite is high, there is a possibility that material handleability during kneading in compound production might be impaired because of the low bulk density of the expanded graphite and this might cause fouling of the working environment.

The amount of the carbon material to be contained is preferably 35 to 85% by weight based on the whole amount of the resin composition. In case where the proportion of the carbon material is too low, conductivity decreases. On the other hand, too high proportions of the carbon material are undesirable because the results are reduced strength and reduced compound flowability to pose a problem that the molding material, when injected into a mold in thermo-compression molding or injection molding, has a widened pressure distribution in the mold to give a molded object having impaired dimensional accuracy.

A lubricant such as, e.g., carnauba wax can be added in the invention to prevent adhesion to the mold or kneading machine during the molding operation. Also usable as the lubricant is stearic acid, montanic acid wax, a metal salt of either of these, or the like. Furthermore, it is possible to add an inorganic filler, e.g., glass fibers, silica, talc, clay, or calcium carbonate, an organic filler, e.g., wood meal, or a plasticizer as long as the incorporation thereof does not reduce conductivity.

The conductive epoxy resin composition of the invention is obtained through melt mixing. The epoxy resin and the hardener each soften at a given temperature. This temperature at which the epoxy resin or hardener softens is called softening point. In the invention, the ingredients may be mixed together by means of an apparatus regulated so that either of the epoxy resin and the hardener is heated to at least the softening point thereof. In the case where either of the epoxy resin and the hardener is liquid at ordinary temperature, the ingredients may be mixed at ordinary temperature. For the mixing, various apparatus in common use can be employed. Examples thereof include a non-pressure kneader, pressure kneader, twin-screw extruder, single-screw extruder, Banbury mixer, intermixer, two-roll mill, and three-roll mill. However, the mixing apparatus should not be construed as being limited to these examples. Also usable is a method in which materials which have been premixed by dry mixing are melt-mixed. The temperature for the melt mixing may be any temperature which is not lower than the softening temperature of the epoxy resin or hardener and at which a hardening reaction hardly proceeds during the mixing. When the epoxy resins and hardness enumerated above are used, the temperature is preferably 50 to 120°C, more preferably 70 to 100°C, still further preferably 80 to 90°C. The period of kneading is preferably from 30 seconds to 5 minutes, more preferably 1 to 3 minutes.

The conductive epoxy resin composition is excellent especially in conductivity and flowability. Because of this, when this composition is used as a molding material, a molded object having excellent mechanical strength and high conductivity can be obtained. In addition, the composition is highly flowable and can hence be molded by injection molding or transfer molding to thereby attain excellent productivity.

The invention further provides a fuel-cell separator obtained by molding the conductive epoxy resin composition described above. A preferred method of molding is injection molding, which has excellent productivity. In injection molding, it is necessary to use a highly flowable molding material. As described above, a low carbon material content suffices for the conductive epoxy resin composition of the invention because the carbon material comprises expanded graphite, which is highly conductive, and the composition is inhibited from undergoing a hardening reaction at the cylinder temperature because the amount of the hardening accelerator contained therein has been reduced. The conductive epoxy resin composition of the invention can hence be injection-molded. Examples of injection molding conditions are shown below.

The cylinder temperature is regulated so that it increases by stages from the part under the hopper toward the nozzle. The temperature of the part under the hopper is set at preferably 30 to 80°C, more preferably 40 to 60°C. When the temperature of the part under the hopper is too high, there are cases where the conductive epoxy resin composition flows backward in the cylinder during injection molding and is unable to fill the mold cavity. When the temperature of the part under the hopper is too low, there are cases where the conductive epoxy resin composition which has been transferred to the front end of the cylinder with the screw does not melt sufficiently and cannot fill the mold cavity due to insufficient flowability. On the other hand, the temperature of the nozzle part is preferably 50 to 120°C, more preferably 70 to 100°C. When the temperature of the nozzle part is too high, there are cases where epoxy resin hardening occurs in the cylinder, making it impossible to eject the conductive epoxy resin composition from the cylinder. When the temperature of the nozzle part is too low, there are cases where the conductive epoxy resin composition does not melt sufficiently and cannot fill the mold cavity due to insufficient flowability.

The mold temperature is preferably 150 to 200°C, more preferably 160 to 190°C. When the mold temperature is too low, there are cases where the conductive epoxy resin composition has insufficient flowability, making it impossible to fill the mold cavity. In addition, a prolonged time period is required for hardening. When the mold temperature is too high, there are cases where the conductive epoxy resin composition cannot be charged into the mold cavity because the period from the initiation of injection into the mold to flow termination due to hardening becomes shorter.

The injection pressure and the hardening period may be 10 to 250 MPa and from 20 seconds to 10 minutes, respectively. However, like the cylinder temperature and mold temperature, conditions may be suitably selected according to the kinds of the epoxy resin, hardener, and hardening accelerator to be used, shape of the fuel-cell separator, etc. The molded object obtained may be subjected to cutting according need.

Compression molding is also possible. The mold temperature is preferably about 150 to 220°C. Since the conductive epoxy resin composition has high flowability, satisfactory mold pattern transferability is obtained. Consequently, in thermo-compression molding also, a separator for fuel cells which has excellent dimensional accuracy can be obtained.

An important point in the invention resides in that a specific hardening accelerator is used in a specified amount together with expanded graphite and these ingredients are melt-mixed. Even when the specific hardening accelerator is used in the specified amount in combination with a general graphite such as a natural graphite or artificial graphite in place of expanded graphite, a conductive epoxy resin composition which has excellent thermal stability and does not harden during melt mixing or in the cylinder is obtainable. In this case, however, it is necessary to incorporate the graphite in a large amount for obtaining the same conductivity as in the case of using expanded graphite. Because of this, the amount of the resin, which improves the flowability of the conductive epoxy resin composition, decreases and the amount of the carbon material, which reduces the flowability, increases. Consequently, the conductive epoxy resin composition containing the general graphite has reduced flowability and considerably impaired moldability. Furthermore, even when expanded graphite is used in combination with the specific hardening accelerator used in an amount larger than the specified amount, this conductive epoxy resin composition undergoes a hardening reaction during the melt mixing thereof or in the cylinder during injection molding because the hardening reaction is apt to proceed. Because of this, the viscosity of the composition increases abruptly with the progress of the hardening reaction and the expanded graphite is broken during melt mixing or in the cylinder during injection molding, resulting in a molded object having reduced strength and considerably reduced conductivity. In the case of dry mixing, the breakage of expanded graphite by kneading is avoided and a conductive epoxy resin composition having excellent conductivity is obtained. However, the conductive epoxy resin composition obtained by dry mixing has low flowability and does not sufficiently flow in the mold even in thermo-compression molding. This composition hence has a problem that it only gives molded objects having low dimensional accuracy. In addition, this composition is too high in viscosity to be charged into a mold in injection molding.

In contrast, when expanded graphite is used in combination with the specified amount of the specific hardening accelerator, those problems are eliminated. When the specific hardening accelerator is used in the specified amount, the conductive epoxy resin composition hardly undergoes a hardening reaction at temperatures of 100°C and lower, to which the composition is supposed to be heated during kneading or in the cylinder during injection molding. Consequently, the shear force to be imposed on the compound can be diminished. The diminished shear force minimizes the breaking of the expanded graphite. Furthermore, the expanded graphite, which has a lower bulk density and a larger surface area and is composed of particles of a thinner platy shape as compared with flaky graphite and spherical graphite, readily forms conduction paths upon mixing with the resin. In addition, the expanded graphite comes into a moderately broken state which enables the molding material to flow sufficiently.

Namely, when the specific hardening accelerator is used in an amount larger than the specified amount, the expanded graphite is broken and conduction paths are less apt to be formed. In contrast, when the specific hardening accelerator is used in the specified amount, the expanded graphite is not broken and conduction paths are apt to be formed. As a result, the conductive epoxy resin composition can have an increased resin proportion and has enhanced flowability. This composition not only gives molded objects having greatly improved dimensional accuracy but also can be molded by injection molding, which has excellent productivity.

### EXAMPLES

The invention will be illustrated in greater detail by reference to the following Examples and Comparative Examples, but the invention should not be construed as being limited thereto.

### EXAMPLES 1 TO 5 AND COMPARATIVE EXAMPLES 1 TO 5

According to each of the formulations shown in Table 1, 500 g in total of the materials were premixed by means of a 10-L Henschel mixer. This mixture was kneaded with a 1-L pressure kneader at a chamber temperature of 100°C for 5 minutes. The resultant composition was pulverized with a pulverizer into particles having a diameter of about 2 mm to obtain a molding material, which was subjected to injection molding. In Comparative Example 4, the mixture obtained by the premixing with a Henschel mixer, i.e., obtained by dry mixing, was used as a molding material without undergoing any treatment. The unit of each ingredient amount in Table 1 is % by weight.

Injection molding was conducted with a molding machine for thermosetting resins (manufactured by Hishiya Seiko Co., Ltd.) having a clamping force of 80 t. The cylinder temperatures were set so that the temperature of the part under the hopper was 50°C and the nozzle temperature was 90°C. The mold temperature was set at 170°C. The injection rate was 20 mm/sec and the hardening time was 60 to 180 seconds. The molding pressure was suitably set in the range of 30 to 70 MPa. Each molding material was injection-molded into a square thin plate having a length of each side of 100 mm and a thickness of 2 mm.

Each molded object was cut into a given shape to obtain a test piece, which was evaluated for the conductivity shown below. In the case of a molded object having blisters, a test piece was cut out of a blister-free area therein.

### Evaluation of Conductivity:

Resistance in the passing-through direction was measured by the method shown in Fig. 2 to evaluate conductivity. A sample 21 cut out of each test piece was set between electrodes 23 through carbon papers 22. The electrical resistance was calculated from the current caused to flow through the electrodes (measured with an ammeter 24) and the voltage between the carbon papers (measured with a voltmeter 25). This value of electrical resistance was multiplied by the area of the sample to determine the passing-through direction resistivity. The results obtained are shown in Table 1.

### Measurement of Hot Bending Strength:

Hot bending strength was determined by the test method of examining bending properties of plastics in accordance with JIS K7171. The test was conducted in a 100°C atmosphere using an Instron type universal testing machine equipped with a thermostatic chamber. The results obtained are shown in Table 1.

**Table 1**

| | | Example 1 | Example 2 | Example 3 | Example 4 | Example 5 | Comp. Example 1 | Comp. Example 2 | Comp. Example 3 | Comp. Example 4 | Comp. Example 5 |
|---|---|---|---|---|---|---|---|---|---|---|---|
| Method of mixing | | melt mixing | melt mixing | melt mixing | melt mixing | melt mixing | melt mixing | melt mixing | melt mixing | dry mixing | melt mixing |
| Formulation (% by weight) | Bisphenol A-novolak epoxy resin | 25 | 25 | 25 | 25 | 25 | 24 | 24 | 25 | 25 | 25 |
| | Phenolic novolak | 12 | 12 | 12.75 | 12.95 | 12.99 | 12 | 12 | 13 | 12 | 12 |
| | Triphenylphosphine | 1 | | 0.25 | 0.05 | 0.01 | 2 | | | 1 | 1 |
| | 2-Methylimidazole | | 1 | | | | | 2 | | | |
| | Expanded graphite | 30 | 30 | 30 | 30 | 30 | 30 | 30 | 30 | 30 | |
| | Artificial graphite | 29 | 29 | 29 | 29 | 29 | 29 | 29 | 29 | 29 | 59 |
| | Lubricant | 3 | 3 | 3 | 3 | 3 | 3 | 3 | 3 | 3 | 3 |
| Amount of the hardening accelerator (parts by weight) per 100 parts by weight of the hardener Bending strength (MPa) | | 8.3 | 8.3 | 2.0 | 0.39 | 0.08 | 17 | 17 | 0 | 8.3 | 8.3 |
| | | 45 | 44 | 45 | 50 | 52 | 35 | 38 | unable to be molded *1 | unable to be molded *2 | 49 |
| Passing-through direction resistance (mΩcm²) | | 17 | 16 | 15 | 12 | 10 | 33 | 40 | unable to be molded *1 | unable to be molded *1 | 299 |

| | | | | | | | | | | | |
|---|---|---|---|---|---|---|---|---|---|---|---|
| *1: The molding material did not harden in a hardening time or 180 seconds and could not be released from the mold. It could not be released from the mold even after a prolonged hardening time of 600 seconds. | | | | | | | | | | | |
| *2: The molding material was too low in flowability to be ejected from the cylinder. | | | | | | | | | | | |

Table 1 shows the following. The molding materials of the Examples, which each contained a carbon material including expanded graphite and further contained 2-methylimidazole or triphenylphosphine in an amount within the specified range, could give molded objects having a high strength and a low electrical resistance. This is thought to be because these molding materials had high thermal stability, were less apt to undergo a viscosity increase accompanying the progress of a hardening reaction at the kneading temperature and cylinder temperatures, and were prevented from undergoing expanded-graphite breakage during the kneading step and molding step. Furthermore, these molding materials had high flowability and could be easily injection-molded.

In contrast, the molding materials of Comparative Examples 1 and 2, which each contained a hardening accelerator in an amount larger than that specified in the invention, gave molded objects which had a lower strength than the moldings of the Examples and had a problem concerning conductivity. The molding material of Comparative Example 3, which contained no hardening accelerator, did not harden in a hardening time of 180 seconds and could not be released from the mold. Even when the hardening time was prolonged to 600 seconds, the molding material of Comparative Example 3 remained unhardened and could not be released from the mold; no molded object could be obtained therefrom. The molding material of Comparative Example 4, which had been obtained through dry mixing, showed poor flowability and could not be ejected from the cylinder of the injection molding machine; no molded object could be obtained therefrom. The molding material of Comparative Example 5, which employed an artificial graphite as a carbon material, gave a molded object having an exceeding high electrical resistance, which is problematic.

It is apparent from those results that a fuel-cell separator excellent in conductivity, dimensional accuracy, and strength is obtained according to the invention.

While the present invention has been described in detail and with reference to specific embodiments thereof, it will be apparent to one skilled in the art that various changes and modifications can be made therein without departing from the spirit and scope thereof.

This application is based on Japanese Patent Application No. 2005-069900 filed on March 11, 2005, the contents thereof being herein incorporated by reference.

## Claims

1. A conductive epoxy resin composition which comprises an epoxy resin, a hardener, a hardening accelerator and a carbon material comprising expanded graphite,
wherein the hardening accelerator comprises at least one member selected from the group consisting of phosphine hardening accelerators, phosphonium hardening accelerators, amine hardening accelerators and imidazole hardening accelerators, and is contained in an amount of 0.01 to 10 parts by weight per 100 parts by weight of the hardener.

2. The conductive epoxy resin composition of claim 1, wherein the hardening accelerator is triphenylphosphine or 2-methylimidazole.

3. The conductive epoxy resin composition of claim 1 or 2, wherein the hardener has two or more phenolic hydroxyl groups in its molecule.

4. The conductive epoxy resin composition of any one of claims 1 to 3, wherein the epoxy resin is a polyfunctional epoxy resin.

5. The conductive epoxy resin composition of any one of claims 1 to 4, wherein the expanded graphite accounts for 5 to 100% by weight of the carbon material, and the remainder of the carbon material comprises at least one member selected from the group consisting of artificial graphites, natural flaky graphite, earthy graphite, carbon blacks and carbon fibers.

6. The conductive epoxy resin composition of any one of claims 1 to 5, wherein the carbon material accounts for 35 to 85% by weight of the whole amount of the composition.

7. A process for producing a conductive epoxy resin composition which comprises:
adding given amounts of an epoxy resin, a hardener and a carbon material comprising expanded graphite to 0.01 to 10 parts by weight, per 100 parts by weight of the hardener, of at least one member selected from the group consisting of phosphine hardening accelerators, phosphonium hardening accelerators, amine hardening accelerators and imidazole hardening accelerators; and then
melt-mixing the ingredients at a temperature not lower than the softening temperature of the epoxy resin or the hardener.

8. A separator for fuel cells, which is formed from the conductive epoxy resin composition of any one of claims 1 to 6.

9. A process for producing a separator for fuel cells, comprising injection-molding the conductive epoxy resin composition of any one of claims 1 to 6.
